**Europäisches Patentamt**

**European Patent Office**

**Office européen des brevets**

(11) Publication number: **0 059 055**
A2

# EUROPEAN PATENT APPLICATION

(21) Application number: **82300753.9**

(51) Int. Cl.³: **F 16 H 47/02**

(22) Date of filing: **15.02.82**

(30) Priority: **21.02.81 ES 499687**
**02.04.81 ES 501025**

(43) Date of publication of application: **01.09.82**
**Bulletin 82/35**

(84) Designated Contracting States: **AT BE CH DE FR GB IT LI LU NL SE**

(71) Applicant: **Parraga Garcia, Julián, Agustin Querol, 8, Madrid (ES)**

(72) Inventor: **Parraga Garcia, Julián, Agustin Querol, 8, Madrid (ES)**

(74) Representative: **Fisher, Bernard et al, Raworth, Moss & Cook 36 Sydenham Road, Croydon Surrey CR0 2EF (GB)**

(54) **Continuous, high-performance hydromechanical speed gear.**

(57) This invention relates to a hydromechanical speed gear for vehicles or other industrial applications consisting of three basic units, namely a unit comprising at least one planetary (or epicyclic) gear or differential group, a variable displacement hydrostatic transmission unit formed by at least one hydraulic pump and one hydraulic motor, preferably of reversible type, and a mechanical unit of cogwheels equivalent to a conventional speed gear unit, the principal characteristics of this hydromechanical speed gear being that it has infinite gear ratios and has high efficiency or performance.

EP 0 059 055 A2

## Continuous,High-Performance Hydromechanical Speed Gear

This invention relates to a continuous, high-performance hydromechanical speed gear.

Speed gear for various types of vehicles which employ hydraulic systems are known in the art. However, gearing known until now suffers very low performance and non-continuous transmission ratio gradation or staging.

The inventor has sought to solve this problem, and has done so with development of a hydromechanical speed gear whose principal characteristic is that it has infinite gear ratios, something apparently not achieved in a satisfactory manner until now. This has been attained, in addition, with very high transmission efficiency as a consequence of the circumstance that the power transmitted through hydrostatic or volumetric hydraulic equipment, as is used here, is but a fraction of the power supplied by the heat engine to which it is connected.

This has been achieved through the proper combination of three units:

Unit A: at least one planetary or epicyclic gear.

Unit B: a variable-flow hydrostatic transmission formed by at least one hydraulic pump and an hydraulic motor, of which at least one is of variable displacement, and all of which are to be, preferably, of reversible type. It is also preferred that these equipments be of the type of axial pistons.

Unit C: a mechanical group of toothed wheels or cogwheels of any appropriate type, equivalent to a conventional speed gear unit.

Naturally, all these elements may be combined in innumerable ways, for adaptation to the specific use in mind.

The following is a description of the invention, with the use of various embodiments which naturally are merely illustrative and are in no way limitative, aided by the attached drawings in which:

- Fig. 1 represents a cross-sectional view of a speed gear corresponding to a first embodiment.

- Fig. 2 represents another embodiment for installation in vehicles whose conventional gear system is separated from the engine.

- Figs. 3, 3', 4, 4', 5, 5', 6, 8, 9, 10, 11, 12, 13, 14, 15 and 16 represent diagrams of speed gears corresponding to several variations, and finally

- Figs. 7 and 17 are graphs of characteristics of the speed gear.

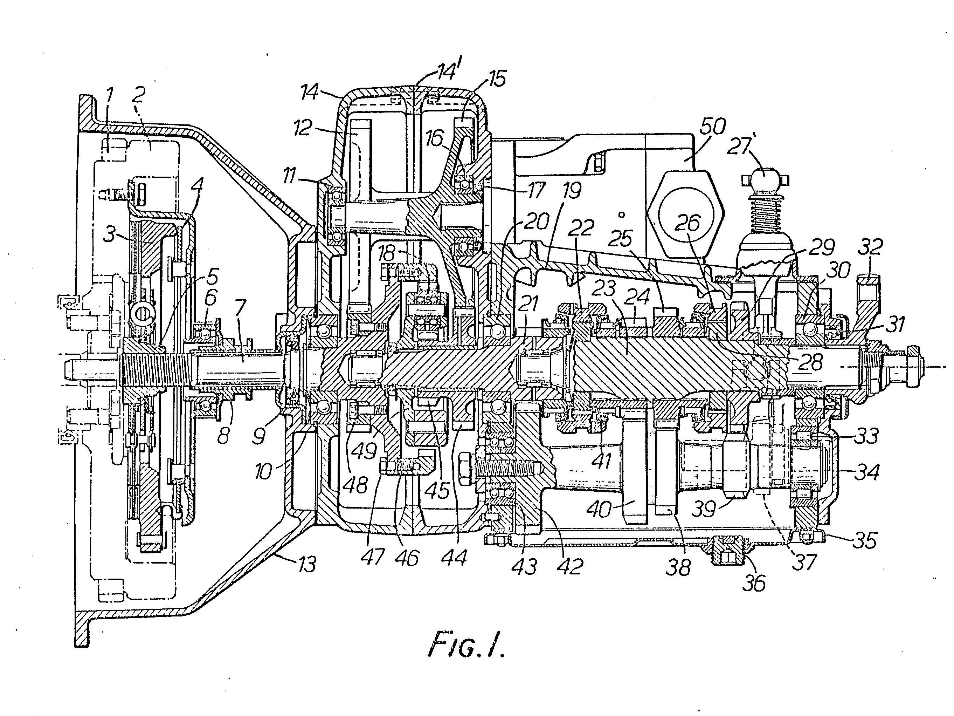

In Fig. 1. the reference numbers identify: 1 = crown gear; 2 = flywheel; 3 = clutch head; 4 = clutch diaphragm; 5 = clutch hub with inner gearing meshing with the outer gearing of shaft 7; 8 = clutch ring; 6, 10, 11, 16, 20, 30, 33 and 43 are bearings; 9, 17 and 31 are radial seals; 13, 14, 14' and 19 are casings; 12 and 48 are intermeshing cogwheels (wheel 12 is driven by or drives a variable-displacement hydraulic pump not shown in the Figure, as it lies below or behind the hydraulic motor 50); 7 and 48 are coaxial and turn-linked; 15 and 44 are intermeshing cogwheels (wheel 15 is driven by the hydraulic motor 50, and cogwheel 44 is integral to, turn-linked and coaxial with 45, the latter being the "sun" or central planet of a planetary gearing whose planetary members are designated by 18 and its crown gear by 46); the screws 47 fasten 46 with the end of 7; the planetary member mount 49 is coaxial and turn-linked with shaft 21 owing to appropriate fluting or ribbing; 44 and 45 are free turning with respect to the shaft supporting them owing to an appropriate bushing or bearing; shaft 21 forms the input shaft of a conventional speed gear which in this Figure is situated to the right of the wall containing bearings 20 and 43. The cited conventional speed gear has three forward drive ratios and one reverse drive ratio:

1st drive: with sleeve 26 set to the left, with which output shaft 23 and cogwheel 25 are turn-linked, transmission is effected through cogwheels 25 and 38; what is commonly known as the constant gearset or gear train is formed by the cogwheel cut and shaped at the end of 21 (not identified in the Figure) and cogwheel 42.

2nd drive: with sleeve 22 set to the right, transmission is made by the meshing of 24 and 40.

3rd drive: sleeve 22 set to the left turn-links 23 and 21 (the gear ratio is the "direct drive" unit).

Reverse drive: cogwheel 37 shifts to the left until it meshes simultaneously with 29 and 39; shaft 37 lies on a plane different from that of the section of the drawing, and is thus represented by a broken line.

28 is turn-linked with 23; 32 is the coupling flange for the drive shaft; 34 and 35 are plate covers; 36 is the drain plug; 27 is the gearshift lever coupling and 41 is the synchronizing cone.

- 4 -          0059055

In this Fig. 1. the elements situated to the left of bearing 10 are known and conventional elements of a heat engine, clutch and flywheel. The three units thus described, and defined as A, B and C, are easily identifiable:

UNIT A (planetary gearing) lies in the lower portion of the zone of this Figure limited by the vertical lines traced by the shafts of bearings 10 and 20; the "sun" is 45; planetary members = 18; crown gear = 46, and planetary member mounts = 49.

UNIT B (hydraulic transmission); the cogwheels 12 and 15, turn-linked with the shafts of the hydraulic pump and hydraulic motor, respectively, lie in the upper portion of the aforementioned zone. The hydraulic motor is 50 and the pump lies beneath. Finally,

UNIT C (conventional speed gear) is situated to the right of the vertical line forming the middle plane of 20 and 43.

This Fig. 1 can correspond, for example, to an embodiment applicable to cars.

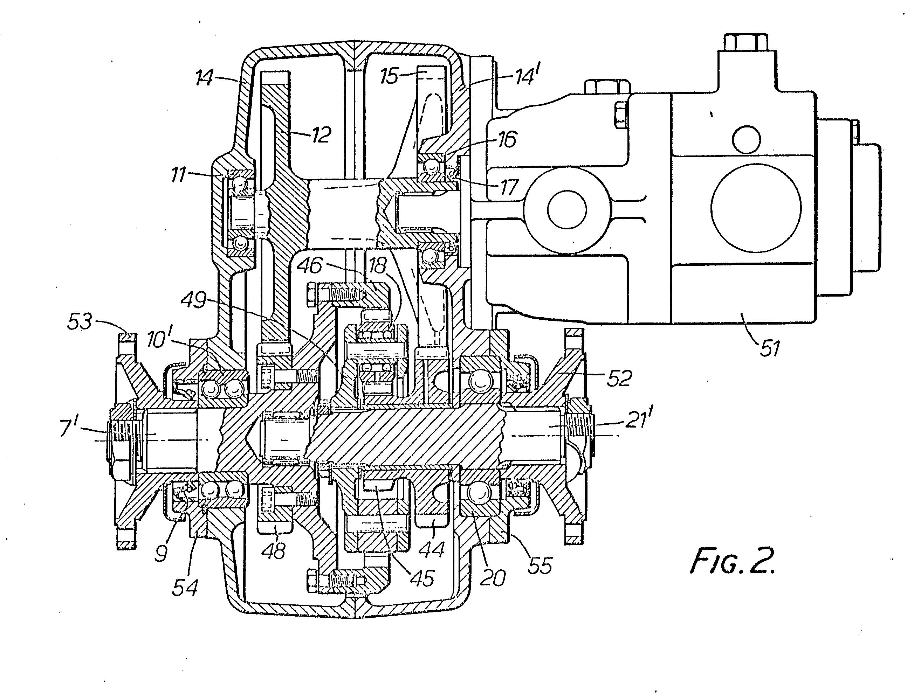

Fig. 2 illustrates a constructional form of Units A and B, the components of which have been given the same numbers as in Fig. 1. In this case the relative positions of hydraulic pump and hydraulic motor have been inverted, the pump being 51 with the hydraulic motor lying behind it. 53 and 52 are the coupling flanges for the drive shafts which connect them with the clutch output and with the input to the conventional speed gear, respectively. 21' is the coaxial output shaft turn-linked with 49 and 52; 10' is a bearing, and 7' is the coaxial input shaft turn-linked with 53, 48 and 46.

This Fig. 2 can correspond, for example, to a version applicable to those industrial vehicles in which the clutch and conventional speed gear units are separated. So as not to excessively complicate them and make their description more difficult, neither of these Figs. 1 and 2 shows the oil lines between the hydraulic pump and hydraulic motor, valves, etc. Nor is there illustration of the lever or control for regulation of the hydraulic displacement, obviously included in the variable-displacement hydraulic pump.

The following operational explanation is applicable to both Fig. 1 and Fig. 2. Let us assume that the revolution speed of 48 is constant (this is the revolution speed of the vehicle's heat engine). The constant variation in revolution speed which can be imposed on the "sun" 45, by moving the flow variation lever of the hydraulic pump, results in also continuous variation in the revolution speed of the planetary member mount 49, that is, of the input shaft to the conventional speed gear (21 in Fig. 1 and 21' in Fig. 2), since the crown gear 46 is turning at the same speed as the heat engine. The kinematic parameters of the planetary gearing and of the hydraulic or hydrostatic transmission are such that the direction of rotation of 49 is always the same as the turn direction of the heat engine, even though the direction of rotation of 45 _is_ _inverted_. As a consequence, the revolution speed of the input shaft of the conventional speed gear can be made to vary between certain maximum and minimum values (both in the same direction of turn as the heat engine), and which will result from or depend upon the characteristics of the planetary gearing, the cogwheels connecting same with the hydrostatic transmission and the hydrostatic transmission itself (pump and motor). The quotient between said maximum and minimum values of the rotation speeds of said input shaft becomes independent from the revolution speed of the vehicle's heat engine; the value of this quotient is

0059055

- 6 -

designated $C_a$ and could be defined as the operational field of the planetary gearing. Naturally, $C_a$ results from or depends upon the limit settings adopted by the hydraulic displacement lever. If the drive ratio (or connected drive) in which Unit C (conventional speed gear) operates is $\underline{i}$ (if i = 2, for example, the second drive is connected), the simple shift of the hydraulic displacement lever has resulted in the vehicle in question having increased its speed of movement even though the revolution speed of its heat engine has remained constant (for example, at the rotation speed corresponding to its minimum specific fuel consumption). It is evident, or better said easily shown, that the revolution speed of the heat engine can be held constant by engaging the immediate transmission ratio, both upper and lower, that is, i + 1 or i - 1 (in this example of i = 2, the 3rd or 1st drive, respectively, of Unit C), if value $C_a$ is held the same as the drive step of the conventional speed gear (the quotient between transmission ratios of consecutive drives); to this effect it is necessary that said displacement lever be at one of its limit settings, and that selection or connection of the consecutive mechanical transmission ratio of Unit C (upper or lower) be realised with previous setting of the displacement lever in its other limit position.

In accordance with the foregoing, it becomes advisable that the version employed of Unit C (conventional speed gear) have uniform drive step, that is, transmission ratios in geometric progression; this will permit limit settings to be fixed of the hydraulic displacement lever. All this means to say that there is no discontinuity between the infinite transmission ratios. Naturally, in case the conventional speed gear - Unit C - does not have uniform drive step, the absence of discontinuity between the drive ratios of the continuous and high-performance hydromechanical speed gear can also be achieved by establishing the proper limit settings of the hydraulic displacement lever. It is best that the limit settings of said displacement lever correspond to the two directions of rotation of the hydraulic motor shaft, through which the following advantages are achieved:

I. Equality of total performance of the continuous gear in those two limit positions, and with a value below the minimum in the case of limit positions corresponding to the same turn direction of the heat engine.

II. Lower revolution speed values of the hydraulic motor.

III. Lower value of maximum power transmitted through the hydraulic transmission.

The displacement lever of Unit B can be moved manually by the driver of the vehicle to achieve, for example, a constant turn-speed value of the heat engine (the desirable value corresponds to its minimum specific consumption), or else automatically (with the same aim of saving fuel) with installation of the proper servomechanisms. Obviously, to increase the speed of the vehicle over a certain value, when in Unit C, or conventional speed gear, the last transmission ratio has been selected, it will be necessary to increase the revolution speed of the heat engine over that corresponding to its minimum specific consumption.

Other variations are now described for simplification, with the aid of diagrammed representations.

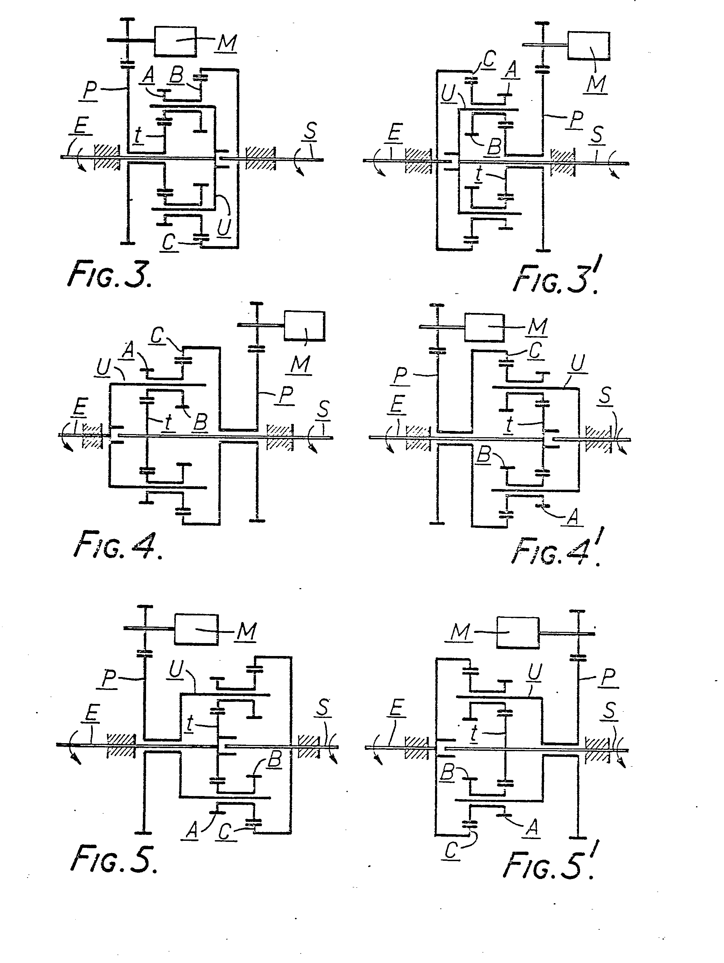

For example, in Figs. 3, 3', 4, 4', 5 and 5' which correspond to the total number of possible combinations with planetary gearing consisting of:

t = cogwheel known as the central planet or "sun"

C = crown gear or internally geared wheel

U = planetary member mount, an element incorporating the planetary member rotation shafts

A and B = coaxial turn-linked cogwheels.  Being double, they are the planetary members in the most general case.

A meshes with t, and B meshes with C and the respective input and output shafts E and S, respectively, of the planetary gearing in question.  E is connected to a heat engine (or electric motor).  S is connected to the input shaft of a conventional speed gear embodiment.  P is a cogwheel meshing with another which is coaxial and turn-linked with the shaft of an hydraulic motor, M.  The variable displacement pump, not represented in these Figures, must be understood as driven from E, from S, directly from the heat engine (for example, from the forward position of its crankshaft) or even by an auxiliary motor.  Obviously, between the hydraulic pump (preferably of variable displacement) and the hydraulic motor M there are appropriate oil lines, valves, filters, displacement lever (part of the pump) and the remaining known elements of a hydrostatic transmission.

In consequence, these Figures correspond to a total of 24 different embodiments of the Continuous, High-Performance Hydromechanical Speed Gear (six variations for each of the four possible positions of the hydraulic pump, already identified).

It can be seen that the embodiments of Figs. 1 and 2, in which the input shaft to the planetary gearing is its crown gear and the output shaft is its planetary member mount, correspond to variations derived from the diagram of Figure 3', with the difference of employing single planetary members.

Fig. 6 illustrates the coupling of the gearing of Fig. 3 with the hydraulic motor M, driving the cogwheel t by means of mesh between cogwheels $\underline{P}'$ and $\underline{P}$. The displacement lever
of hydraulic pump $\underline{b}$ is $\underline{m}$, $m_1$ and $m_2$ being its limit
positions. 56 is a turn-linking coupling between $\underline{S}$ and
shaft 21, the input shaft to a conventional speed gear
embodiment being identified as 57 and of which 32 is its
output flange. $\underline{b}$ is driven by the pair of cogwheels Q and
Q'. This Fig. 6 also indicates another possible embodiment
of the continuous gear forming the object of this
application.

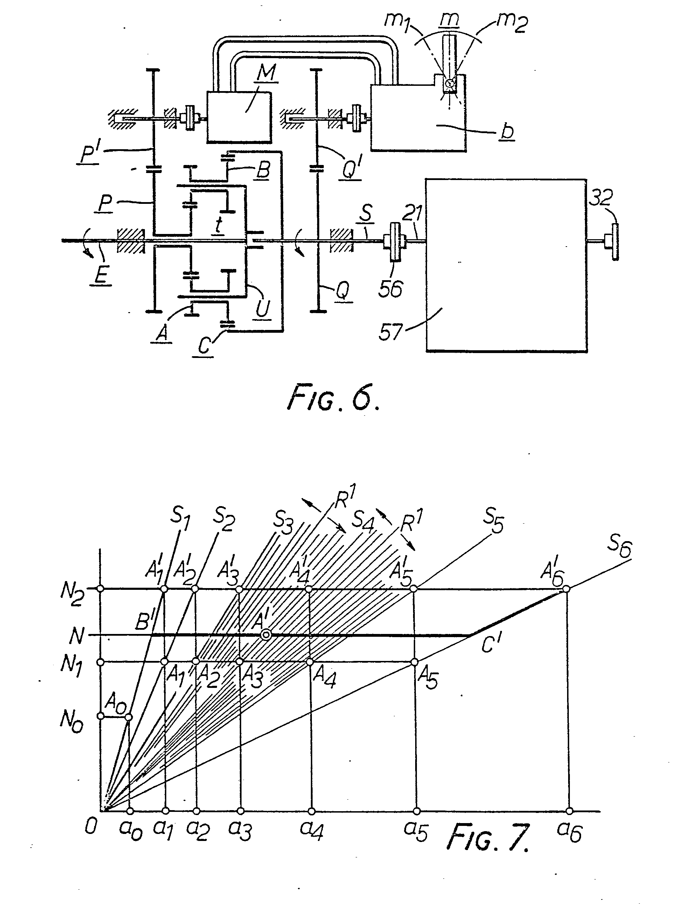

Fig. 7 is a graph showing the function of the Continuous,
High-Performance Hydromechanical Speed Gear, both of the
already-described and successive embodiments, and its
comparison with the function of a conventional speed gear,
that is, of a finite number of transmission ratios. In
this graph:

abscissas = revolution speed of the output shaft of the
continuous (or of one of conventional type) gear, or speed
of movement of the vehicle, since both magnitudes are
proportional.

ordinates = revolution speed of the heat engine (which is
the revolution speed of shaft $\underline{E}$ of Figs. 3, 3', 4, 4', 5 and
5'). $N_2$ is the maximum rotation speed and $N_1$ is the
rotation speed that corresponds to minimum specific
consumption values (or maximum motor torque) of the
vehicle's heat engine. $N_0$ is the minimuum operational speed
of the heat engine, thus superior to the idling speed.

The straight lines $s_1$, $s_2$, $s_3$, $s_4$, $s_5$ and $s_6$ indicate the
transmission ratios of a conventional speed gear of six
forward speeds. Points $a_1$, $a_2$, $a_3$, $a_4$, $a_5$ and $a_6$
correspond to the maximum vehicle movement speeds with
conventional speed gear. $A_1'$, $A_2'$, $A_3'$, $A_4'$, $A_5'$ and $A_6'$ are the
limits, also of the use of conventional speed gear drives, to which the maximum speed of the heat engine $N_2$ corresponds. $A_1$, $A_2$, $A_3$, $A_4$ and $A_5$ indicate the stages of a transmission ratio to the consecutive of said conventional speed gear, in the event these stages are realised at maximum torque engine speed. Segment $OA_o$ indicates slip of the conventional clutch. Now in this Fig. 7, the polygonal line $A_oA_1'A_1A_2'A_2A_3'A_3A_4'A_4A_5'A_5A_6'$, known as "sawtooth", indicates - as is known - the function of a vehicle incorporating a conventional speed gear, either manual or automatic. The function of the continuous speed gear as described and claimed in this patent application is represented by line $A_oB'A'C'A_6'$, in which and from point B' to point C' the revolution speed of the heat engine is held constant at value N; this value N can be any between $N_o$ and $N_2$; naturally, and with the aim of saving fuel, it will be preferable to operate at the revolution speed of value $N_1$.

The family of straight lines designated R', which cover or sweep the areas comprised between the straight lines $s_i$ and $s_i + 1$, indicate the infinite transmission ratios of the continuous speed gear, and are graphic representation of the function of the planetary gearing and of the variable displacement hydraulic transmission.

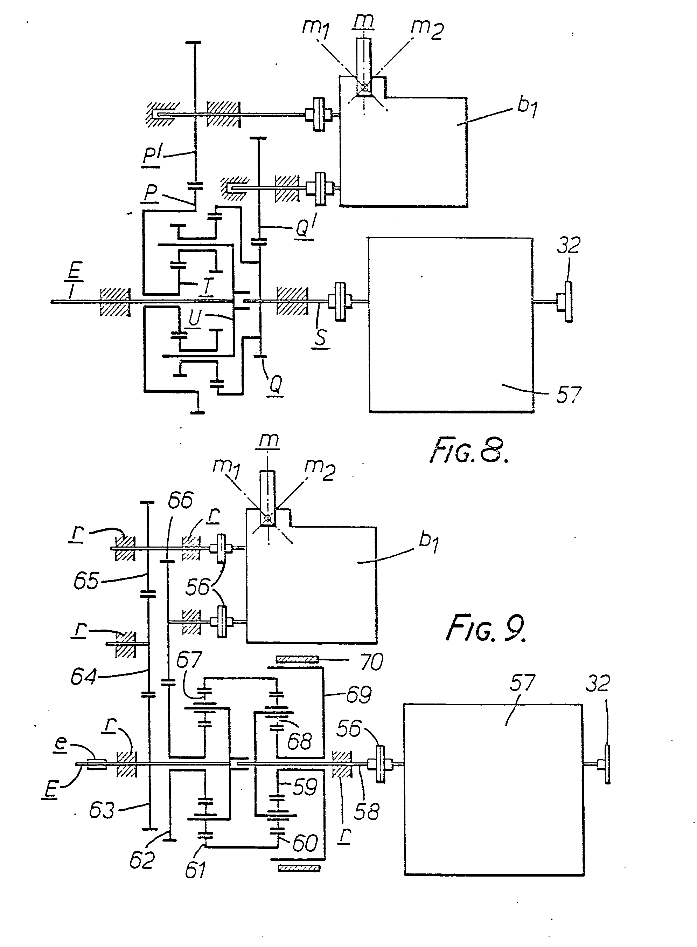

Fig. 8 is a diagram of another embodiment. In this case it is the version of Fig. 6, with the difference that the hydraulic pump and hydraulic motor are integrated in a single housing, the unit being identified as $b_1$.

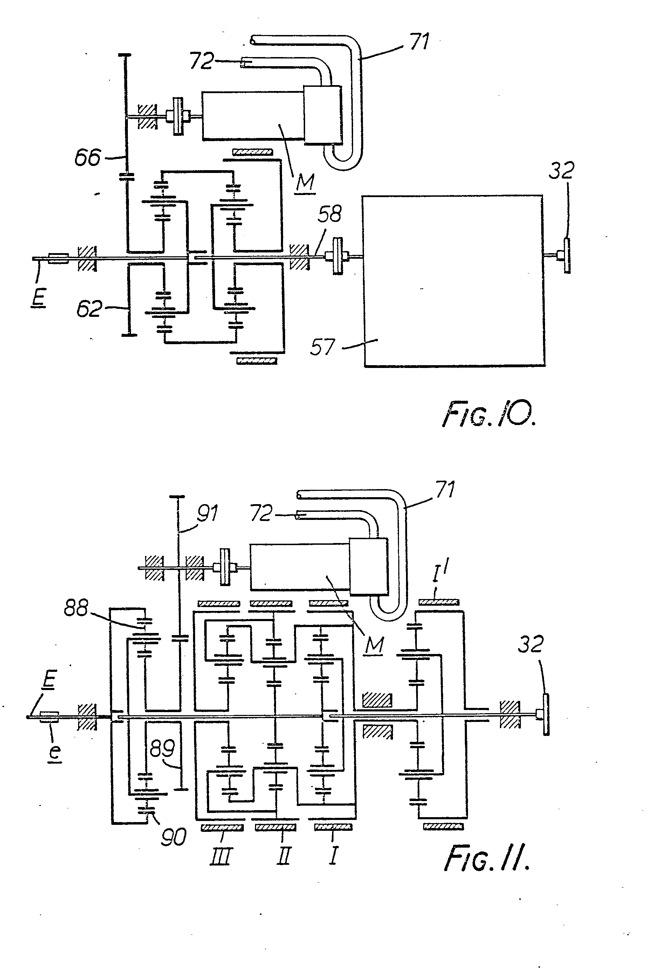

Figs. 9, 10, 11, 12, 13, 14, 15 and 16 represent, also in diagram, eight additional possible embodiments of the continuous speed gear of this patent application, according to the following descriptions.

Fig. 9 - E = input shaft; e = cogwheel of E; r = bearings; 63, 64 and 65 = cogwheels, 63 meshing with 64 and the latter with 65; 62 and 66 = meshing cogwheels; 60 and 61 = planetary gearing crown gears, coaxial and turn-linked; 67 and 68 = planetary members; 59 = "sun" of a planetary gearing, in which 60 is the crown gear, 68 are the planetary members and the planetary member mount (not designated in the Figure) is coaxial and turn-linked with shaft 58; 58 is rigidly turn-linked by coupling 56 with the input shaft of a conventional speed gear 57; $b_1$, m, $m_1$ and $m_2$ indicate what was already explained for Fig. 8; 70 = band, shoe-type or any other form of brake for preventing turn of the central planet 59 by means of member 69 coaxial and turn-linked with 59. The function of brake 70 is the same as that of a clutch: in effect, when 69 is free-turning by not being braked by 70, there is no power transmission from E to 58, precisely because of said freewheeling of 69 (and of 59 which is turn-linked with 69). On the other hand, there is power transmission when 70 is braking 69. In summary, this Figure represents an embodiment with which it is not necessary to use the conventional clutch, since the latter's function is realised by the brake 70.

Fig. 10 - This is a version similar to that of the preceding Figure, with the difference that the hydraulic pump is driven by the vehicle's heat engine and thus has not been represented in this Figure, and in addition this pump obviously is not integrated in the same housing with the hydraulic motor M; 70 and 71 are lines between the hydraulic pump and hydraulic motor.

Fig. 11 - This corresponds to use of the planetary gearing, Unit A, as indicated in Fig. 3' but with simple planetary members; that is, input through the crown gear 90 and output of the planetary gearing through its planetary member mount, the planetary members being 88. Meshing between cogwheels 89 and 91 establishes the turn-linkage between the central planet and the hydraulic motor $\underline{M}$. The shaft of the planetary member mount constitutes the input shaft to a conventional embodiment of a Wilson-type speed gear, of which I, II and III indicate the brakes of the respective crown gears for its three drive ratios or three forward speeds, I' being the brake for the reverse drive connection.

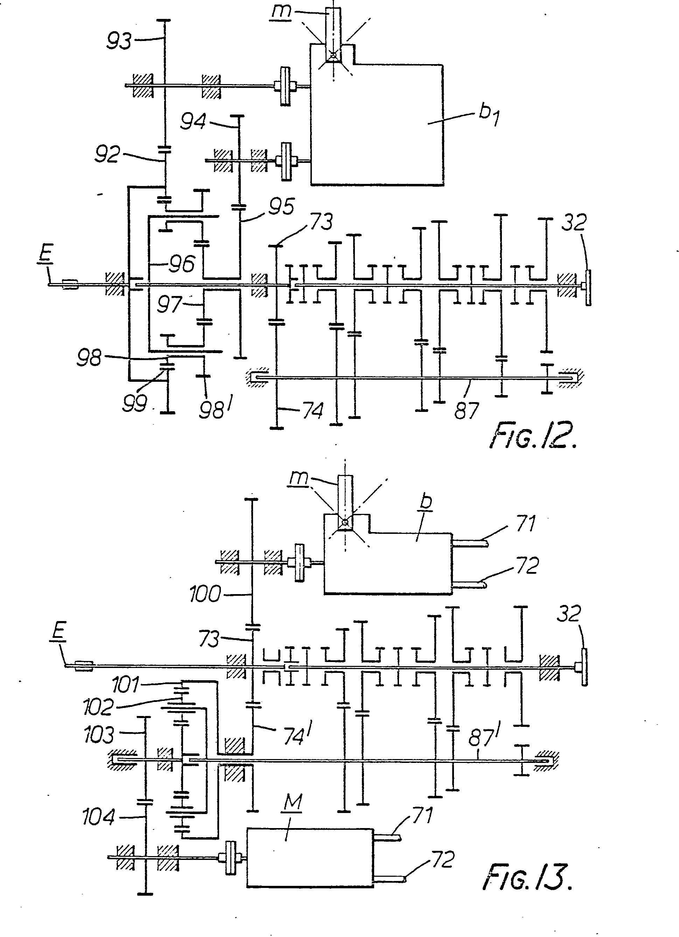

Fig. 12 - This Figure also corresponds to the embodiment of Fig. 3' (input by crown gear and output by planetary member mount). Crown gear 99 is coaxial and turn-linked with cogwheel 92, which meshes with 93. The planetary member mount 96 is coaxial and turn-linked with the input shaft of a conventional speed gear which has been shown in diagram, 73 and 74 being the pair of cogwheels commonly known as a constant gearset or gear train. 87 is the intermediate shaft of the conventional speed gear. 97 is the central planet. 98' and 98 form the double planetary member. 95 transmits movement, by meshing with 94, to the hydraulic motor. $b_1$, m and E represent the same as in Fig. 8. The illustrated conventional speed gear diagram corresponds to that of a version having six forward speed ratios and one for reverse drive.

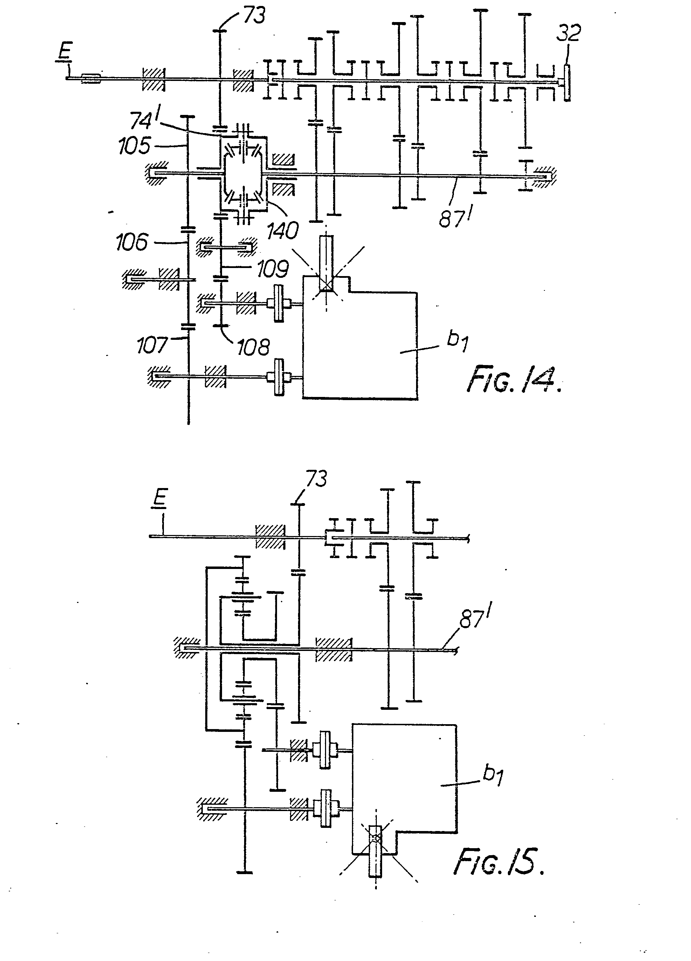

Fig. 13 - In this version, the diagrammed conventional speed gear has five forward drive ratios and one reverse drive. 73 and 74' are the constant gearset, and 87' is the intermediate shaft. 73 also meshes with 100, thus transmitting drive to the shaft of the variable displacement hydraulic pump $\underline{b}$. Meshing with 103, 104 transmits drive from the hydraulic motor $\underline{M}$ to the central planet of a planetary gearing, of which 102 is its planetary member and 101 its crown gear. 101 and 74' are coaxial and turn-linked. 87' and the planetary member mount are coaxial and turn-linked.

Fig. 14 - Here also a diagrammatic plan has been drawn of Unit C, conventional speed gear, with the mechanical connections as indicated. E is the input shaft, 73 and 74' are a pair of meshed cogwheels, 87' is the intermediate shaft, 110 is the so-called planetary-mount gearbox of a conventional differential gearing, coaxial and turn-linked with 74'. One of the planetary members of said differential group is turn-linked and coaxial with 87', the other being so with cogwheel 105. 105 meshes with 106, and the latter with 107. 74' meshes with, in addition to 73, 109, and the latter with 108. $b_1$ is the already known unit of variable displacement hydraulic pump and motor, contained in the same housing.

Figs. 15 and 16 - in both Figures, E is the input shaft connected to the heat engine. 73 is the rigidly keyed cogwheel, coaxial with E. 87' is the intermediate shaft and $b_1$ the hydraulic pump and motor unit. The basic difference between these Figures is that in Fig. 15 the intermediate shaft 87' is linked to the crown gear of the planetary gearing (Unit A, as earlier defined), while in Fig. 16 it is linked to the planetary gear. In neither Figure is Unit C (conventional speed gear) completely illustrated, this being considered unnecessary; nor are there references to cogwheels or other elements, in the belief that these Figures are sufficiently explicit, particularly following the explanation of previous Figures containing similar elements.

As is evident and obvious from the previous descriptions, Unit C constantly referred to as a conventional speed gear does not remain as such in some of the versions described, due to the connections necessary to link it with the planetary gearing (Unit A) and the variable displacement hydraulic transmission (Unit B) to form or achieve the Continuous, High-Performance Hydromechanical Speed Gear. This occurs, for example, in Fig. 11 with the coupling of the planetary member mount element to the input shaft of the Wilson gear, which could form one solid piece with the former. The same occurs in Fig. 12: the described planetary member mount has been linked to the input shaft of the conventional speed gear. In Figs. 13, 14, 15 and 16 the respective speed gears, which in the corresponding descriptions have been referred to as conventional, are no longer so since they have the essential modifications inherent to their intermediate shafts in the manner or form as explained.

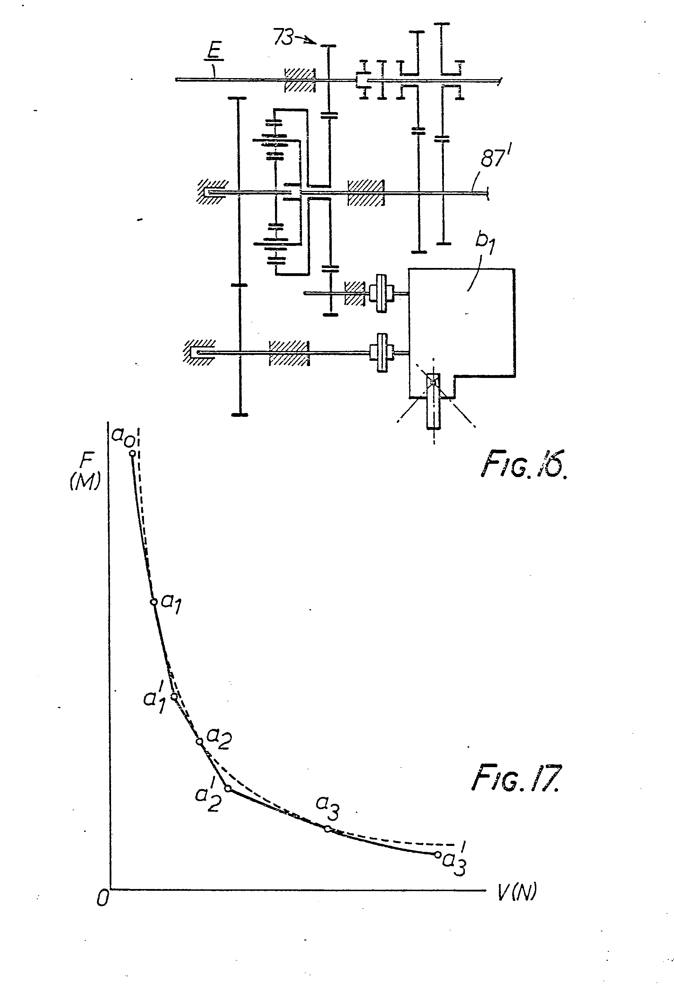

Finally, Fig. 17 corresponds to a graphic explanation of the function of the speed gear object of this patent application,characterised in this case in that the number of transmission ratios of its Unit C is three (for example in its use in a car or passenger-type vehicle). The ordinate axis indicates the power source F in driving wheels (or their engine torque, since they are proportional magnitudes $M$). The abscissa axis represents the speed values $V$ of the vehicle (or the rpm of its wheels or of the output shaft of the constant gear, magnitudes which are also proportional). The broken line indicates the curve, branch of equilateral hyperbole, which responds to the formula $F.V$ = net power of the heat engine (that is, driving power available in wheels corresponding to a certain revolution speed thereof. Points $a_0$, $a_1'$, $a_2'$ and $a_3'$ correspond to maximum hydraulic displacement of the hydrostatic transmission. Points $a_1$, $a_2$ and $a_3$ indicate the functions corresponding to zero hydraulic output in the hydrostatic transmission (zero speed of the hydraulic motor). The first of the cited points are not found in the broken line inasmuch as the hydrostatic transmission efficiency is not 100%; however, they are very close to it. To obtain an orientational or approximate idea it is enough to consider that, for example, for efficiency of the hydrostatic transmission, that is, between hydraulic pump and hydraulic motor, and uniform drive step of Unit C (conventional gear) of a value of 1.40, the maximum losses do not exceed 2.70%, or in other words the minimum efficiency of the continuous and high-performance hydromechanical gear (and which occurs when the hydraulic displacement is maximum) exceeds 97.30%. Naturally, this is relative efficiency, that is, the unit is at full efficiency when power transmission is realised exclusively through mechanical means: the meshing of cogwheels. The explanation or justification of this high performance is found in the fact that the hydraulic transmission leads to or involves maximum power which is a small fraction of the power being provided by the heat engine, since the planetary gearing - Unit A - prevents passage of all the power of said heat engine to Unit B. In summary, when the hydraulic displacement lever is in the position of zero flow (zero speed of the hydraulic motor, zero power transmitted by the hydraulic pump and hydraulic motor), efficiency is 100%; on the other hand, when said lever is in its limit positions or of maximum displacement for turning the hydraulic motor in one and the other direction, performance or efficiency is on the order of 97.30%.

Present speed gears, with a finite number of transmission ratios regardless of whether manual or automatic, function according to the sawtooth diagram explained for Fig. 7. This means that shift from one drive to the next involves a change in the revolution speed of the heat engine, which in turn means that specific fuel consumption(grams/kilowatt-hour = g/kW.h) varies between different values according to the curve characteristic of the heat engine in relation to its specific consumption, which relates such consumption to revolution speed.

Use of the new speed gear object of this patent application, with its infinite transmission ratios, permits use of the vehicle's heat engine in a manner such that its turning speed is compatible during the greatest possible time with the application and/or running use made at the speed of minimum specific consumption (rotation speed $N_1$ of Fig. 7), with which it is obvious that total fuel consumption will be less than that corresponding to the same application and distance if realised with a conventional speed gear.

It is interesting to note that the function realised by the mentioned planetary gearing, defined as Unit A, can also be carried out by a differential group; that is, Unit A can be substituted by a differential group. This is logical for the fact the latter is a particular case of the former, or can be considered as such. In effect, the member commonly known as the "differential spider" fulfils the role of the planetary member mount, the planetary members of the differential group correspond to the central planet and crown gear of the planetary gearing, and finally the planetary members of both are the same; as is evident in this case, the gear teeth are conical instead of cylindrical as correspond to planetary gearing. In the same circumstances of substitution there is a differential group of planetary members of varying size; and in both cases, that is, differential groups with the same or different planetary members, these can be either simple or double.

The present tendency, above all in the field of industrial vehicles, is application of speed gears having an increasing number of transmission ratios, for example 16 drives, with the aim of maintaining the rotation speed of the vehicle's heat engine as close as possible to the speed corresponding to its minimum specific consumption. Obviously these speed gear embodiments are costly. But it could be said that the new speed gear here described has arrived at the goal, or better said is within reach of the final objective of obtaining those conventional embodiments, since it has infinite transmission ratios and will not represent any additional cost; consider, for example, the saving supposed by non-incorporation of the present hydraulic torque converter, a complicated, costly, heavy and unwieldy element which furthermore is of very low performance or efficiency. The same reasoning can be applied to cars or passenger-type vehicles, for which there is increased application of conventional speed gears of five drives, instead of the usual four.

It is evident that the design of the Continuous, High-Performance Hydromechanical Speed Gear incorporating the three component units comprising it in one or more housings, forming a compact group, will result in a combination of a series of important characteristics: reduced volume and weight, high functional reliability, low cost/efficiency ratio, etc., and for both manual and automatic shift versions. For the already cited case of one of the present conventional speed gears of 16 drives, whose range is 13.9 (quotient between the limit transmission ratios), the continuous speed gear object of this application need have only eight mechanical transmission ratios (that is, Unit C of only 8 drives), with which its minimum efficiency (occurring only when the hydraulic displacement lever is in its maximum output positions) is on the order of 97.40%. In the case of substitution of a passenger car conventional speed gear, whose range is 3.95 with five drives, by a continuous gear, it will be enough for the latter to have 3 transmission ratios, with which its minimum performance or efficiency would be on the order of 96.50%. In both examples, naturally, the respective ranges of 13.9 and 3.95 are maintained. Of note is that these performances can be raised substantially by appropriate stepping or scaling of the mechanical transmission ratios (of Unit C), so that efficiency is greater at the most frequently used speeds, than at other speeds. Another circumstance to remember is that breakdown of the hydraulic transmission, albeit improbable, does not mean breakdown of the continuous hydromechanical speed gear, provided provision is made for braking the planetary gear element (Unit A) driven by the hydraulic motor of Unit B; in case of such breakdown, function would continue as a conventional speed gear.

The new speed gear also has the important advantage of being able to incorporate the function of the present conventional clutch, as was explained for Figs. 9 and 10, or else establishing the appropriate "by-pass" or hydraulic short-circuit between the hydraulic connections existing between hydraulic pump and hydraulic motor of Unit B. Available oil pressure due to the existence of Unit B possibly facilitates automatized function, and perhaps recommends the use of Wilson-type embodiments for Unit C.

CLAIMS:

1.  Continuous, High-Performance Hydromechanical Speed Gear, characterised in that it consists basically of the following three units: Unit A, comprising at least one planetary (or epicyclic) gear or one differential group; Unit B, a variable displacement hydrostatic transmission constituted by at least one hydraulic pump and one hydraulic motor, at least one of which is of variable displacement and all of which are preferably of reversible type, and it is also preferable that this equipment have axial pistons; Unit C, a mechanical group of cogwheels of any appropriate type, equivalent to a conventional speed gear unit.

2.  Continuous, High-Performance Hydromechanical Speed Gear according to the preceding claim, characterised in that one of the three elements characteristic of Unit A: "sun" or central planet, planetary member mount and crown gear in the case of planetary gearing, or one of the three elements characterising a differential group also of Unit A: planetary member mount box turn-linked with the planetary member shaft, a planetary gear or the other planetary gear, is driven or moved by means of the appropriate cogwheels, or in a direct manner by the shaft of the hydraulic motor forming part of Unit B.

3.  Continuous, High-Performance Hydromechanical Speed Gear according to the preceding claims, characterised in that the turning shaft of the hydraulic pump of Unit B is driven, if necessary through the appropriate cogwheels, by one of the following elements: a) the heat or electric engine of the vehicle or of any other industrial application; b) one of the two elements pertaining to the planetary gearing or differential group of Unit A already described in the preceding claim, and which does not correspond to that driven by the hydraulic motor; c) auxiliary engine, heat or electric, although use is preferable of one of the first two connections a and b.

4. Continuous, High-Performance Hydromechanical Speed Gear according to the preceding claims, characterised in that one of the two elements of the planetary gearing or differential group of Unit A, and which does not correspond to that driven by the hydraulic motor, receives its turning movement or is driven either in a direct manner or through the appropriate cogwheels by the heat or electric engine of the vehicle (or of the industrial application in question).

5. Continuous, High-Performance Hydromechanical Speed Gear according to the preceding claims, characterised in that the element of the planetary gearing or of the differential group of Unit A which is free, or in other words is not driven by the hydraulic motor or by the heat engine of the vehicle in question, drives or turns one or more cogwheels of Unit C.

6. Continuous, High-Performance Hydromechanical Speed Gear according to the preceding claims, characterised in that its input shaft, namely that connected to the heat engine of the vehicle or of the industrial application in question, with or without intervention of a clutch, is that which drives the element of Unit A described in Claim 4; the output shaft of the continuous, high-performance hydromechanical speed gear is the appropriate shaft of Unit C which does not correspond to that connected according to the description in the preceding claim.

7. Continuous, High-Performance Hydromechanical Speed Gear according to the preceding claims, characterised in that its three basic components as described in Claim 1 can be integrated in a single compact group, or otherwise the

0059055

first two - Unit A and Unit B - can be grouped together, completing this second composition with an appropriate speed gear embodiment of the commonly-known type connected therewith.

8. Continuous, High-Performance Hydromechanical Speed Gear according to the preceding claims, characterised in that its three basic components can be grouped in the form or manner appropriate and convenient for the application desired.

9. Continuous, High-Performance Hydromechanical Speed Gear according to the preceding claims, characterised in that the function of a common conventional clutch can be incorporated, establishing the proper hydraulic short-circuit, deviation or "by-pass" between the hydraulic pump and hydraulic motor of Unit B.

10. Continuous, High-Performance Hydromechanical Speed Gear according to the preceding claims, characterised in that incorporation of planetary gearing between Units A and C, with appropriate braking action controlled by the driver of the vehicle or by automatic operation, provides the present function of a conventional clutch.

11. Continuous, High-Performance Hydromechanical Speed Gear according to the preceding claims, characterised in that the variable displacement hydraulic transmission defined as Unit B can have its hydraulic pump and hydraulic motor either separate or together in a compact single unit; this Unit B is complete, and in addition to the appropriate oil lines includes valves, filters, oil tank, oil cooler (if necessary), etc.

12. Continuous, High-Performance Hydromechanical Speed Gear according to the preceding claims, characterised in that Unit C is provided with a suitable lever, control or other mechanism adequate for selecting the appropriate transmission ratio, which can be operated either manually or automatically.

13. Continuous, High-Performance Hydromechanical Speed Gear according to the preceding claims, characterised in that the hydraulic displacement lever, control or mechanism of Unit B can be operated either manually or automatically, and if necessary the proper correlation of movement can be made between this control and that described in the preceding claim.

14. Continuous, High-Performance Hydromechanical Speed Gear according to the preceding claims, characterised in that it includes a mechanism whose function is to immobilize the element of the planetary gearing or of the differential group, of Unit A, driven or moved by the hydraulic motor and described in Claim 2, in case of breakdown in the hydraulic transmission (Unit B) which makes it inoperative; in such case the function of the continuous, high-performance hydromechanical speed gear will be similar to that of a conventional speed gear, that is, non-continuous or of a finite number of transmission ratios.

FIG.1.

0059055

FIG.2.

0059055

FIG. 3.

FIG. 3'.

FIG. 4.

FIG. 4'.

FIG. 5.

FIG. 5'.

FIG.6.

FIG.7.

FIG.8.

FIG.9.

0059055

FIG. 10.

FIG. 11.

Fig.12.

Fig.13.

0059055

Fig. 14.

Fig. 15.

0059055

FIG. 16.

FIG. 17.